Europäisches Patentamt

(19) European Patent Office

Office européen des brevets

(11) Publication number: **0 013 622**
**B1**

# (12) EUROPEAN PATENT SPECIFICATION

(45) Date of publication of patent specification: **15.12.82**

(51) Int. Cl.³: **H 02 G 3/06, F 16 L 33/22**

(21) Application number: **80300088.4**

(22) Date of filing: **09.01.80**

(54) **End fitting assembly for a conduit.**

(30) Priority: **11.01.79 GB 7901039**

(43) Date of publication of application:
**23.07.80 Bulletin 80/15**

(45) Publication of the grant of the patent:
**15.12.82 Bulletin 82/50**

(84) Designated Contracting States:
**AT BE CH DE FR IT LU NL SE**

(56) References cited:
**CH - A - 482 315**
**DE - A - 672 398**
**GB - A - 879 865**
**GB - A - 930 096**
**GB - A - 1 037 718**
**GB - A - 1 209 258**
**US - A - 2 150 471**

(73) Proprietor: **SUPERFLEXIT LIMITED**
**Leigh Road**
**Slough SL1 4BB (GB)**

(72) Inventor: **Kirby, Roy John**
**13 Abbey Road Chertsey**
**Surrey KT16 8AL (GB)**

(74) Representative: **Evans, David Charles et al,**
**F.J. CLEVELAND & COMPANY 40-43, Chancery Lane**
**London, WC2A 1JQ (GB)**

Courier Press, Leamington Spa, England.

End fitting assembly for a conduit

This invention relates to an end fitting assembly for a conduit having a convolute outer tube and an internal screen. Such fittings are known, for example from our British Patent No: 879865 which describes such an end fitting, which fitting includes an inner and an outer screw-threaded sleeve assembly, which assemblies are screwed toward each other in an axial direction thereby clamping the outer tube and the screen against inclined planes provided on the internal faces of the nipple assembly. Not only are such arrangements difficult to assemble in practice, however, but they are also complex, and hence, expensive to manufacture, and we have now found that for many applications a simpler fitting is more advantageous.

The Applicants seek to provide, therefore a simple end fitting which can be easily assembled with a conduit and readily disassembled if desired.

According to the present invention there is provided an end fitting (14) for a conduit having an internal screen (11) and an outer convolute tube (10) which fitting comprises,

a nipple (15) adapted to be retained in an end portion (12) of said outer convolute tube,

a sleeve (23) adapted to co-operate with said nipple by which said screen can be entrapped,

characterised in that in use with said nipple retained in the end portion of the outer convolute tube, said sleeve, with an end portion (13) of said screen folded thereover so as to interpose between said sleeve and said nipple, is urged axially as an interference fit into an internal circumferential recess (22) within said nipple, thereby to readily entrap the screen with the recess.

The sleeve may have an internal diameter corresponding to an internal diameter of a portion of the nipple adjacent the recess thereby to provide the assembly with a common internal bore.

The internal screen may also comprise a tubular braid of tinned copper wire.

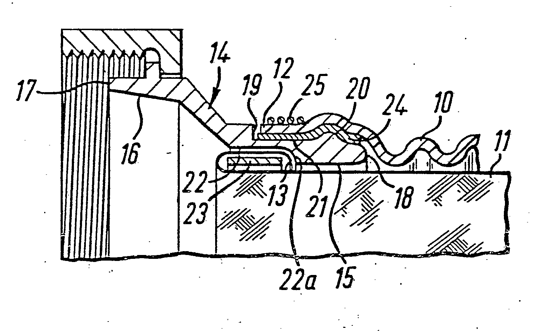

The following is a description, by way of example only and with reference to the accompanying drawing which is a diagrammatic representation, of one method of carrying the invention into effect.

Referring now to the drawing, there is shown an outer convoluted tube 10 of plastics material and an inner co-axial tube 11 of braided tinned copper wire. The outer tube 10 has an end portion 12 and the inner tube 11 has an end portion 13. The end portions 12, 13 of the tubes 10, 11 have inserted therebetween a cylindrical portion 15 of an end fitting 14. The end fitting 14 expands from the cyindrical portion 15 to a portion 16 of enlarged diameter. The end fitting has a front end wall 17 and a rear end wall 18. The cylindrical portion 15 has a circumferential shoulder 19 and a circumferential bead 20 spaced axially rearwardly from the shoulder 19 thereby defining a groove 21. The outer circumferential surface of the cylindrical portion 15 between the bead 20 and the rear end wall 18 is tapered rearwardly and inwardly of the cylindrical portion 15. The cylindrical portion 15 is provided with an inner circumferential recess 22 extending axially rearwardly of the cylindrical portion 15 the recess having a radial end wall 22a.

The recess 22 is adapted to receive a sleeve 23. The internal diameter of the sleeve 23 is substantially the same as the internal diameter of the cyindrical portion 15 adjacent the recess 22. The external diameter of the sleeve 23 is less than the diameter of recess 22. The difference between the external diameter of the sleeve 23 and the diameter of the recess 22 is less than unit cross sectional area of the inner tube 11.

The outer tube 10 and the cylindrical portion 15 have inserted therebetween a cylindrical gasket 24. The outer tube 10 is secured relative to the cylindrical portion 15 by means of a clamp 25.

The end fitting 14 is connected with the outer tube 10 and the inner tube 11 by locating the cylindrical gasket 24 on the cylindrical portion 15 so that the gasket is located in the groove 21 and extends rearwardly over the bead 20. The cylindrical portion 15 then is inserted between the outer tube 10 and the inner tube 11 so that the end portion 12 of the outer tube 10 is located on the portion of the gasket 24 contained in the groove 21. The clamp 25 then is located circumferentially around the end portion 12 of the tube 10 and is tightened so as to secure the outer tube 10 relative to the end fitting 14.

The sleeve 23 then is inserted axially of the inner tube 11 beyond the end portion 13 and the end portion 13 is turned outwardly and rearwardly of the inner tube 11 over the sleeve 23. The sleeve 23 having the end portion 13 of the inner tube 11 located on an outer surface thereof is inserted axially into the recess 22. Since the difference between the outer circumference of the sleeve 23 and the inner circumference of the groove 21 is less than unit cross sectional area of the inner tube 11, the end portion 13 of the inner tube 11 is squeezed between the sleeve 23 and the cylindrical portion 15 such that the sleeve 23 is insertable into the recess 22 only by applying increased force thereto. The sleeve 23 then is pushed axially of the recess 22 so that an annular portion of the inner tube 11 is gripped between the radial end wall 22a of the recess 22 and an adjacent side wall of the sleeve 23.

In this manner, the internal tube 11 is positively retained in the end fitting 14 but may be removed or replaced without damage to the tube 11, the cylindrical portion 15 or the end fitting 14. Furthermore, since the internal diameter of the sleeve is substantially the same as the diameter of the cylindrical portion 15 adjacent the recess 22, the sleeve does not reduce the bore of the cylindrical portion 15. Also, the end fitting 14 may be used whether or not the inner tube 11 is present.

## Claims

1. An end fitting (14) for a conduit having an internal screen (11) and an outer convolute tube (10) which fitting comprises,

a nipple (15) adapted to be retained in an end portion (12) of said outer convolute tube,

a sleeve (23) adapted to co-operate with said nipple by which said screen can be entrapped,

characterised in that in use with said nipple retained in the end portion of the outer convolute tube, said sleeve, with an end portion (13) of said screen folded thereover so as to interpose between said sleeve and said nipple, is urged axially as an interference fit into an internal circumferential recess (22) within said nipple, thereby to readily entrap the screen within the recess.

2. A fitting as claimed in claim 1 wherein the sleeve has an internal diameter corresponding to an internal diameter of a portion of the nipple adjacent the recess, thereby to provide an assembly with a common internal bore.

3. A fitting as claimed in either of the preceding claims wherein the internal screen comprises a tubular braid of tinned copper wire.

4. An assembly of an end fitting as claimed in any preceding claim and a conduit as defined in claim 1.

## Patentansprüche

1. Endanschlußstück (14) für eine Leitung mit einem inneren Sieb (11) und einem äußeren gewellten Rohr (10), wobei das Anschlußstück aufweist: einen Nippel (15), der in einem Endteil (12) des äußeren gewellten Rohres aufgenommen werden kann, und eine Hülse (23), die mit dem Nippel zusammenarbeiten kann, wodurch das Sieb festgelegt werden kann, dadurch gekennzeichnet, daß der Nippel im Endteil des äußeren gewellten Rohres gehalten wird, daß ein Endteil (13) des Siebs so um die Hülse gefaltet ist, daß er zwischen der Hülse und dem Nippel angeordnet ist, und daß bei Gebrauch die Hülse axial mit Festsitz in eine Innenumfangsausnehmung (22) im Nippel gedrückt wind, um hierdurch das Sieb innerhalb der Ausnehmung leicht festzulegen.

2. Anschlußstück nach Anspruch 1, dadurch gekennzeichnet, daß die Hülse einen Innendurchmesser hat, der einem Innendurchmesser eines an die Ausnehmung angrenzenden Teils des Nippels entspricht zur Schaffung einer Anordnung mit einer gemeinsamen Innenbohrung.

3. Anschlußstück nach einem der vorhergehenden Ansprüche, dadurch gekennzeichnet, daß das innere Sieb aus einem rohrförmigen Geflecht aus versinntem Kupferdraht besteht.

4. Anordnung eines Endanschlußstücks nach einem der vorhergehenden Ansprüche und einer Leitung gemäß Anspruch 1.

## Revendications

1. Raccord d'extrémité (14) pour une canalisation offrant un blindage ou écran interne (11) et un tube enroulé externe (10), raccord qui comprend un embout (15) destiné à être maintenu dans une partie d'extrémité (12) de ce tube enroulé externe, un manchon (23) destiné à coopérer avec cet embout de manière à pouvoir retenir le blindage, caractérisé en ce que lors de l'utilisation avec l'embout maintenu dans la partie d'extrémité du tube enroulé externe, le manchon précité avec une partie d'extrémité (13) du blindage repliée par-dessus de manière à s'interposer entre le manchon et l'embout, est repoussé axialement avec un ajustage à interférence dans un évidement périphérique interne (22) à l'intérieur de l'embout, de manière à retenir aisément le blindage à l'intérieur de l'évidement.

2. Raccord suivant la revendication 1, caractérisé en ce que le manchon possède un diamètre interne correspondant au diamètre interne d'une partie de l'embout au voisinage de l'évidement, de manière à offrir un assemblage avec un alésage interne commun.

3. Raccord suivant l'une ou l'autre des revendications 1 et 2, caractérisé en ce que le blindage interne comprend une tresse tubulaire en fil de cuivre étamé.

4. Assemblage d'un raccord d'extrémité suivant l'une quelconque des revendications précédentes et d'une canalisation telle que définie dans la revendication 1.

0 013 622